# EUROPEAN PATENT SPECIFICATION

(11) **EP 3 573 050 B1**
(45) Date of publication and mention of the grant of the patent: **10.06.2020**
(21) Application number: 18183908.5
(22) Date of filing: 17.07.2018
(51) Int. Cl.: G10L 15/16

(54) **COMPUTING PLATFORM AND METHOD FOR MODIFYING VOICE DATA**
RECHENPLATTFORM UND VERFAHREN ZUM MODIFIZIEREN VON SPRACHDATEN
PLATE-FORME INFORMATIQUE ET PROCÉDÉ PERMETTANT DE MODIFIER DES DONNÉES VOCALES

(30) Priority: 25.05.2018 US 201815989256
(43) Date of publication of application: 27.11.2019
(73) Proprietor: i2x GmbH, 10119 Berlin (DE)
(72) Inventor: Martay, Claudio, 12047 Berlin (DE); Feinauer, Christoph, 20123 Milan (IT); Brehm, Michael, 81925 München (DE)
(74) Representative: Hoffmann Eitle

(56) References cited:
- US-A1- 2007 112 571
- US-B1- 9 460 711
- US-B2- 9 484 022
- US-B2- 9 842 585

## Description

### BACKGROUND OF THE INVENTION

The present invention relates to a computing platform and method for modifying voice data to achieve a desired outcome, in particular to improve a man machine interface and human interaction.

Computers may be used to monitor and augment human interactions for improved machine control and more effective communication. For instance, computer monitoring and augmentation of voice can help voice recognition to control operation of a machine and speakers to improve their intelligibility in dealing with counterparts.

Normally, an offline device that requires voice inputs may have limited processing and memory capacity for processing an entire transcription dictionary. For example, a coffee machine may include a voice control function, i.e. detected voice is recognized and analyzed to trigger a control function, so as to be operated via voice commands. One typical solution is using a smaller dictionary for Automated Speech Recognition (ASR) which might be limited to 10 specific words that are useful for the voice commands of the offline device; such as "coffee, on, off, latte, milk, stop...". One drawback of this solution is that the offline device is limited in processing few very specific instructions leading to a lower accuracy compared to a fully functional ASR operating on a cloud system.

Another typical solution is connecting the offline device via a Wi-Fi connection to a central system which is connected to a cloud for accessing a fully functional ASR. Such an example may include a living room connected to a smart home control system, such as available from Google™ or Amazon™, where the electronic appliances in the living room are connected with "smart plugs". These "smart plugs" allow the electronic equipment to communicate wirelessly with a microcontroller in the living room which is connected to the cloud for processing a large dictionary of voice commands. The limitations in this case are the requirement of additional accessories, and an internet connection from the microcontroller to the cloud device hosting the ASR model. In this case, the system is dependent on an internet connection which is not always available in cases where the device is out of internet service or has issues relating to bandwidth capacity or blackouts.

A coffee maker company, for example, may manufacture portable coffee machines with a voice control function, wherein the voice control function is built into the small computing device within the coffee machine. Since the computing device in the coffee machine is a lightweight and cost effective device, the processing, wireless internet, and memory capacity are not sufficient to host or connect to a fully operational ASR model. Thus, the coffee maker company wishes to improve the functionality of the voice control on their voice response coffee machines, and most importantly wants to retain the mobility and offline benefits of the coffee machine so it can be used in remote areas without internet access.

Therefore, it is a challenge to increase the intelligibility of voice to be processed on a computing platform requiring relatively low processing power and memory capacity, so as to increase the accuracy of voice commands, for example.

US 9 460 711 B1 relates to multilingual acoustic deep neural networks. Rather than training monolingual acoustic models for each language from scratch, a larger and more accurate multilingual acoustic model is jointly trained based on training data from multiple languages. In this matter, systems and methods described in US 9 460 711 B1 allow for parameter sharing across languages which may be helpful in particular for resource-scarce languages where limited training data is available or is costly to obtain. A system is configured to receive acoustic input data and determine an output, wherein the acoustic input data is a feature vector or sequence of feature vectors that are extracted from a speech signal. A sequence of feature vectors is determined by sampling and filtering a portion of a speech signal to determine a spectral representation of the data. The received acoustic input data is then provided as input to a multilingual DNN acoustic model which is configured to output probabilities with respect to phonetic states corresponding to the acoustic input data. A decoder is then configured to search a space of possible words of a given language to match one or more phonetic states to words based on the probabilities output by the multilingual DNN acoustic model.

### SUMMARY OF THE INVENTION

It is desired to provide means for modifying voice data so as to improve a man machine interface and human interaction to offer convenience, accessibility, accuracy, and/or additional remote capabilities.

The mentioned objects and drawbacks are solved by the subject-matter of the independent claims. Further preferred embodiments are defined in the dependent claims.

### BRIEF DESCRIPTION OF THE DRAWINGS

FIG. 1A is an illustration of a computing platform, including a trained machine learning model, for modifying voice data to achieve a desired outcome of a conversation.
FIG. 1B is an illustration of a training mode showing the training of the machine learning model and a running mode showing the usage of the trained machine learning model.
FIG. 2 is an illustration of a method of using the computing platform to modify voice data.
FIG. 3 is an illustration of a method of training the machine learning model of the computing platform.
FIG. 4 is an illustration of a method of using the computing platform to conduct a real-time voice conversation.
FIG. 5 is an illustration of components of the computing platform.
FIG. 6 is an illustration of components of a general ASR system and its interface with the computing platform.

### DETAILED DESCRIPTION

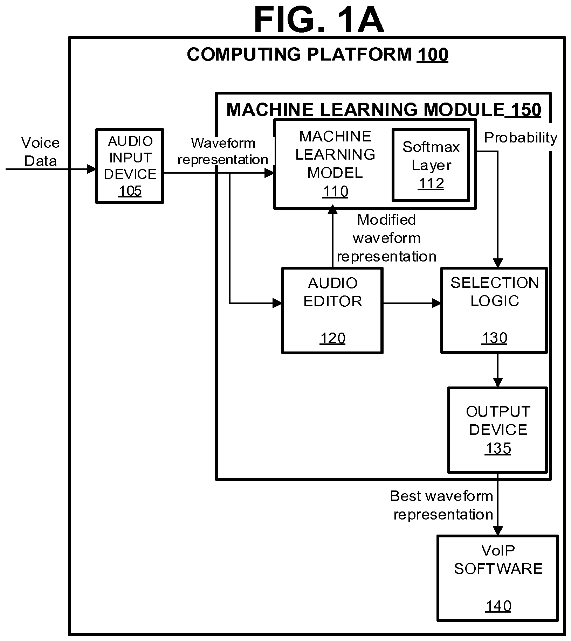

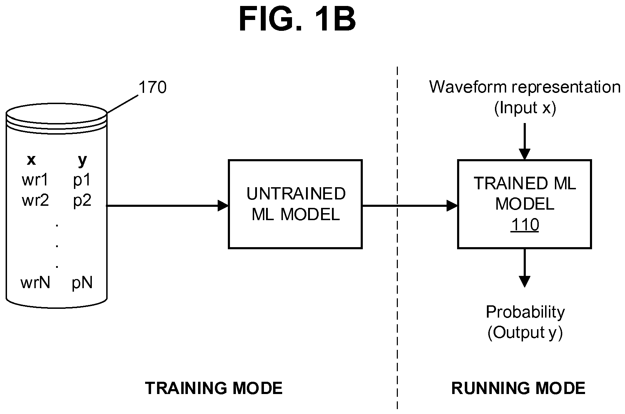

Reference is made to FIGS. 1A and 1B, which illustrate a computing platform 100 and an overview of a training mode, a running mode, and their mutual interaction. The computing platform 100 is not limited to any particular type. Examples of the computing platform 100 range from a plurality of servers to a personal computing device such a smart phone, desktop computer, tablet, gaming console, smart watch, laptop computer, and smart headphone set.

As illustrated by FIG. 1A, the computing platform 100 may comprise an audio input device 105, an audio editor 120, a trained ML model 110 with a softmax layer 112, a selection logic 130, an output device 135, and a Voice over IP (VoIP) software module 140. More details with respect to the computing platform 100 are given below.

The audio input device 105 receives voice data and generates a waveform representation of the input voice data. Voice data may constitute a voice command such that the computing platform 100 may control a function of an electronic device based on the output waveform representation corresponding to the voice command. In particular, the voice data may be a voice command requesting an electronic device to carry out a specific function expressed by the voice command, e.g. a coffee machine is requested to output a specific type of coffee, like a cappuccino, or a robot is requested to lift an arm.

As stated above, a waveform representation may represent voice data of a voice command which is applied to a device. In addition, it may also be possible that a waveform representation represents voice data of a participant in a conversation. Therefore, voice data of a conversation may include one or more waveform representations. As used herein, a waveform representation of voice data represents speech as a plot of pressure changes over time. In such a representation, the x-axis of the plot corresponds to time, and the y-axis of the plot corresponds to amplitude.

From each generated waveform representation, phonetic characteristics can be determined. The phonetic characteristics may include acoustic phonetic characteristics. Examples of the acoustic phonetic characteristics include, but are not limited to, pitch, timbre, volume, power, duration of sounds, noise ratios, and filter matches. For example, noise ratio depends on the background noise present while a voice is recorded. The duration of sounds may relate to the characteristics where one utterance begins and another utterance ends which is usually different depending on dialects. Filter matching may be used to enhance the quality of sounds which are to be significant in the voice data. In more detail, a filter matching sample may be applied to enhance a voice from background noise in a sample waveform. Filter matching involves layering a known sound with unknown sounds to determine a sound to noise ratio and isolating the background noise. To obtain a modified waveform representation using the audio editor 120, explained in detail below, a parameter of the phonetic characteristics of the waveform representation is modified.

As used herein, a parameter of the phonetic characteristic may refer to a value or value range of a phonetic characteristic. For example, volume (a phonetic characteristic) may have a parameter value of 60 dBa or a parameter range of 55-65 dBa.

The audio editor 120 may be a digital audio editing software and may modify a parameter of an acoustic phonetic characteristic of the waveform representation to produce modified waveform representations. Digital audio editing software that can make the modifications in real time is commercially-available.

The computing platform 100 further comprises the trained ML model 110. The trained ML model 110 may be a trained supervised ML model. In the following, the trained ML model 110 is referred as a trained supervised ML model 110. Examples of trained supervised ML models 110 include, but are not limited to, a neural network, logistic regression, naive bayes, decision tree, linear regression, and support vector machine. Examples of neural networks include, but are not limited to, a feed forward network, recurrent neural network, neural network with external memory, and a network with attention mechanisms. An exemplary code to be used for the ML model 110 may be derived from tensorflow libraries including a softmax cross entropy objective function.

The trained supervised ML model 110 has been trained in a training mode to determine a probability of a waveform representation, which can be unmodified (raw) or modified, producing a desired outcome of a machine operation or a conversation.

In more detail, the trained supervised ML model 110 is a probabilistic model which may take the form of a conditional probability model or a joint probability model. The trained supervised ML model 110 has been trained on many input-output pairs to create an inferred function that maps an input to an output which is understood as supervised learning. The input of each input-output pair is a waveform representation of voice data stored in a database, and the output is a probability corresponding to a probability of a desired outcome. Each probability of outcome data indicates whether and how well the corresponding unmodified or modified waveform representation produced the desired outcome. Generally, the aim is to modify the waveform representation from the audio input device 105 to obtain a waveform representation associated with a higher probability compared to the probability of the waveform representation from the audio input device 105.

An overview of training mode and running mode with regard to the trained supervised ML model 110 is illustrated in FIG. 1B, in more detail. In a training mode shown on the left side of FIG. 1B, a database 170 stores a plurality of waveform representations wr1, ..., wrN corresponding to training voice data and a plurality of probabilities p1, ... pN corresponding to the waveform representations. An untrained ML model accesses the database and is trained on the input-output pairs (x,y) of the waveform representations being the input and the corresponding probabilities being the output. After the ML model has been trained, the running mode is performed. During the running mode, the trained supervised ML model 110 receives waveform representations corresponding to voice data which are different from the training voice data of the training mode. The trained supervised ML model 110 is now able to determine the probability corresponding to each waveform representation.

In particular, the waveform representations correspond to different outcomes. An outcome in robotics may be a robotic lifting an arm or an outcome in the domain of coffee machines may be a coffee machine to pour a specific type of coffee like a cappuccino. In this matter, the probability of a waveform representation indicates the accuracy or the degree of accurate processing of the waveform representation into action. In the field of robotics, for example, the degree of accurate processing shows how accurate the robot has performed a move of one of its parts, like lifting an arm, in correspondence to a voice data or voice command spoken by an operator. In other words, if the voice data or voice command transmitted to the robot included the information to lift an arm, which is the desired outcome, the probability shows the likeness of the actual action of the robot to the desired outcome commanded by the operator.

The trained supervised ML model 110 of FIG. 1A may process waveform representations received by the audio input device 105 or may process modified waveform representations received by the audio editor 120. The waveform representations may correspond to voice commands such that the computing platform 100 may control a function of a device such as a robot to lift its arm. Waveform representations may also correspond to voice data from one or more participants in a conversation. An example for a conversation may be a situation where one participant records a speech and one or more other participants hear the recorded speech at a later time.

Referring back to the example of a participant interacting with a portable coffee machine with a voice control function, a voice modification company may train an ML model during a training mode on voice data corresponding to inputs of participants given to the coffee machine, and the associated probabilities or labeled values determined by the success of the input voice data delivering a coherent instruction to the coffee machine. In more detail, during the training mode a plurality of waveform representations stored in a data base and probabilities assigned to each waveform depending on the outcome are input. The success or desired outcome is determined by the context and requirements of a specific situation or use case and is used as the label associated with an acoustic input which trains the model. The desired outcome may for example be a more effective communication with an electronic device which may include an ASR, wherein a communication is more effective when the voice command is processed by the device more accurately resulting in an actual action by the device similar to the desired outcome. A label, here a probability, of how effective an audio sample was at creating a clear message to the device would be used to train the ML model. Another example is to train a ML model for a factory setting where instructions from a worker are communicated verbally to instruct machines or robots to carry out specific functions like turning on or off or moving parts of the machine or robots lifting arms.

During the training mode, the audio editor 120 may be used for feature extraction to save time. The audio editor 120 may guide the untrained ML model towards features or acoustic phonetic characteristics being advantageous for training the ML model. The pitch values of a waveform, for example, may be a useful feature or acoustic phonetic characteristic that is extracted and delivered to the untrained ML model for training the ML model on a pitch dataset. Another possibility is not to use the audio editor 120 for guiding the untrained ML model, but to let a neural network which may be used in the ML model to identify patterns of phonetic characteristics.

The running mode is then tailored towards modifying the parameter of the extracted feature, which constitutes an acoustic phonetic characteristic, like the pitch, to generate modified waveform representations corresponding to voice data of a person. In most cases, an unmodified waveform representation corresponding to the voice data or voice command may not be the most accurate and efficient one to be recognized by a machine. Hence, modified waveform representations are generated to improve the accuracy and efficiency of an interface of a participant and a machine or device, like a coffee machine or robot.

That is why the trained supervised ML model 110 may receive a waveform representation from the audio input device 105 and several modified waveform representations from the audio editor 120 to output the corresponding probabilities of the waveform representations corresponding to different outcomes. In the case of portable coffee machines with voice control function, the probability of an outcome may be determined by how accurate the transcription of the coffee machine was in interpreting the given audio sample which may most typically be represented as a transcription accuracy %. With a large enough dataset which was generated during the training mode, the trained supervised ML model 110 is capable of outputting accuracy probabilities associated with the input waveform representations.

During the running mode, the audio editor 120 may then extract the feature, i.e. acoustic phonetic characteristic, on which the trained supervised ML model 110 has been trained during the training mode and may make modifications of the parameter of the extracted acoustic phonetic characteristic to generate modified waveform representations.

Referring back to FIG. 1A, the trained supervised ML model 110 may have a so called "softmax" layer 112 or equivalent thereof. In probability theory, an output of the softmax layer 112 may be used to represent a categorical distribution - that is, a probability distribution over different possible outcomes. Rather than simply outputting a binary indication (e.g., yes/no) of the desired outcome being achieved, the softmax layer 112 may provide a probability of the outcome being achieved.

After the trained supervised ML model 110 has output probabilities of the waveform representations, the selection logic 130 selects the modified waveform representation associated with the highest probability of the probabilities determined by the trained supervised ML model 110, the outcome of the waveform representation corresponding to the input voice data.

The output device 135 may output the modified waveform representation associated with the highest probability. The output modified waveform representation may be further processed in the computing platform 100 to control a device to carry out a function expressed by the underlying voice data. The output device 135 may be part of the selection logic 130.

The computing platform 100 may comprise a VoIP software module 140 which receives the modified waveform representation associated with the highest probability and converts the modified waveform representation into voice data. If the computing platform is used for a device like a coffee machine in which a waveform representation of voice data is used to carry out a specific function, no VoIP software module 140 is needed. The modified waveform representation associated with the highest probability is then directly applied to the device or machine for carrying out a function.

The computing platform 100 may further comprise a machine learning module 150, wherein the machine learning module 150 comprises the audio editor 120, the trained supervised ML model 110 with the softmax layer 112, the selection logic 130, and the output device 135.

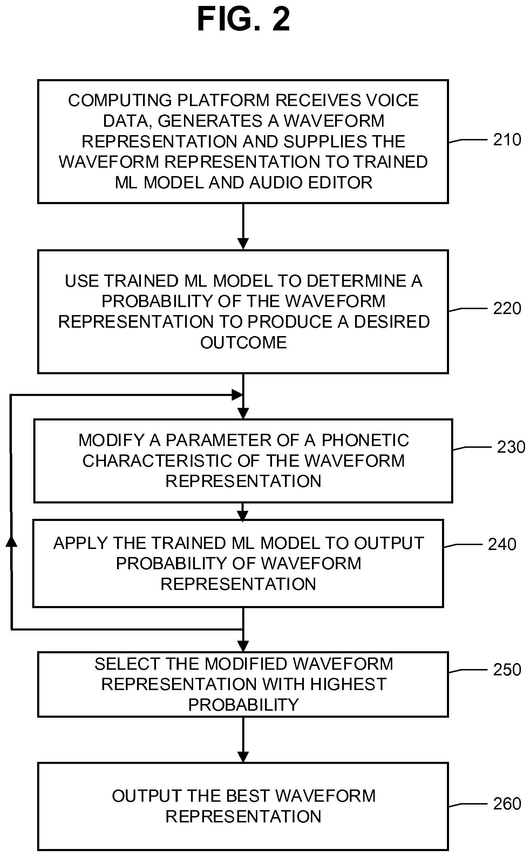

FIG. 2 illustrates a method for modifying a wave representation corresponding to voice data by using the computing platform 100 with the trained supervised ML model 110 during a running mode. The voice data may constitute a voice command from a participant to a machine or device, like a coffee machine or robot, or may constitute voice data of a conversation between a participant using the computing platform 100 (the "first participant") and one or more other participants.

At block 210, the computing platform 100 receives voice data from a participant and generates a waveform representation. For instance, the participant speaks into a microphone, which generates digital voice data. Then the audio input device 105 generates a waveform representation in a digital format from the digital voice data. The waveform representation is supplied to the trained supervised ML model 110 and the audio editor 120 in the digital format.

At block 220, the trained ML model 110 determines a probability of the waveform representation, wherein the probability indicates the probability of producing a desired outcome. The probability of the desired outcome is taken from the softmax layer 112.

At block 230, a parameter of a phonetic characteristic of the waveform representation is modified at the audio editor 120 to produce a modified waveform representation.

At block 240, the trained supervised ML model 110 is applied to the modified waveform representation to output the probability corresponding to the modified waveform representation.

During the running mode, the functions of block 230 and block 240 are performed repeatedly to produce several modified waveform representations and to output several probabilities corresponding to each modified waveform representation. For instance, a plurality of modified waveform representations having different modified parameters of the phonetic characteristic is created by the audio editor 120 which modifies the parameter of the acoustic phonetic characteristic. The trained supervised ML model 110 is applied to each modified waveform representation to determine the corresponding probability.

At block 250, the selection logic 130 selects the modified waveform representation having the highest probability among all generated modified waveform representations for which the outcome corresponds to the input voice data (the selection logic 130 may be implemented in the audio editor 120 or may be implemented by separate software). The highest probability may be an optimal probability, the highest probability after a fixed number of iterations, or the highest probability after a predefined time period has elapsed. For instance, the predefined time period may be the time it takes for a human to respond, as defined by psychoacoustics (e.g., 300 ms to 500 ms), or a machine to process data or information.

At block 260, the output device 135 outputs the best waveform representation, wherein the best waveform representation is the modified waveform representation with the highest probability. The computing platform 100 may be programmed with the VoIP software module 140 which receives the best waveform representation. The VoIP software 140 may convert the best waveform representation into voice data and may send the voice data corresponding to the best waveform representation to the other participants. The VoIP software 140 may also be used to receive voice data from the other participant(s). The computing platform 100 may include an audio output device such as speakers for playing the voice data from the other participant(s). If the best waveform representation is sent to a machine which directly processes the best waveform representation for carrying out a function, no VoIP software module 140 for converting the waveform representation into voice data is needed.

If the audio editor 120 modifies the parameters of a plurality of acoustic phonetic characteristics, the parameters may be changed simultaneously or sequentially. As an example of making the modifications sequentially, the parameter of a first phonetic characteristic is modified until a best waveform representation with the highest probability is found for the first characteristic, and then the parameter of a second phonetic characteristic is modified until a new best waveform representation with the highest probability is found for the second phonetic characteristic.

In the method of FIG. 2, only a single computing platform 100 is used. However, a method herein is not so limited: multiple computing platforms 100 may be used during a running mode. For example, a robot can be controlled by three participants, wherein each participant uses its own computing platform 100. Consequently, the waveform representations corresponding to voice data of all three participants may be modified for controlling the robot.

As for determining which phonetic characteristic(s) shall be extracted to modify the parameter(s), the determination may be made before or after the training mode. For instance, in a first case, the phonetic characteristics may be determined prior to training by speech experts who look at prior research and conduct research to identify those phonetic characteristics that are significant in affecting the desired outcome. These results may be used by a fixed feature extraction unit during the training mode to extract the acoustic phonetic characteristic determined by the speech experts in order to modify the corresponding parameter. The fixed feature extraction unit may be part of the audio editor 120, wherein phonetic characteristics may be regarded as features. In a second case, a neural network underlying the ML model may define and extract own phonetic characteristics without relying on the results of speech experts in order to modify the corresponding parameter. It is possible to either decide between these two cases or to use the results of the speech experts in the first iteration and feature extraction of the neural networks in the second iteration.

In some configurations, the computing platform 100 may also allow a user to define the phonetic characteristic(s) or features whose parameters are to be modified. For instance, the user may believe that having a higher pitch is useful for a specific interaction, such that the fixed feature extraction extracts the acoustic phonetic characteristic "pitch" to train the ML model. The computing platform 100 may display a user interface that allows a phonetic characteristic (e.g. timbre, loudness, pitch, speech rate) to be selected, and an action to be taken on (e.g., increase or decrease) the parameter of the selected and extracted phonetic characteristic.

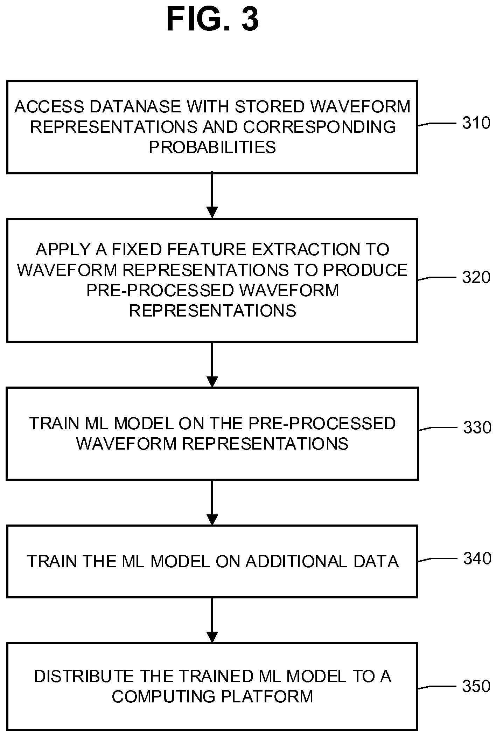

Reference is made to FIG. 3, which illustrates a method of training an ML model. The training is performed by a computing platform, which may be the computing platform 100 of FIG. 1A, or which may be a different computing platform.

At block 310, a database including stored waveform representations of training voice data and probabilities of the stored waveform representations, the waveform representations corresponding to different outcomes and the probabilities corresponding to a degree of accurate processing, is accessed. The training voice data represents voice commands for carrying out a function of a device or may represent a plurality of conversations between participants. A conversation may be saved in its entirety, or only portion may be saved. The training voice data may be accessed from data storage (e.g., a local database, a digital warehouse, a cloud), streamed, a physical portable storage device, (e.g., USB drive, CD).

The waveform representation related to the voice data of each prior voice command or conversation may be matched with a probability of a desired outcome. During training, each pair of waveform representation and probability that match is input in the ML model such that the ML model is then able to learn. The probability of a desired outcome can be obtained by a rating system, wherein users rate the outcome of a waveform representation corresponding to voice data or voice command in relation to a desired outcome. The rating system produces probabilities of a desired outcome which is used as waveform representation and probability pair in the training mode as input to the ML model.

Another option is to use a machine which determines the accuracy of a waveform representation corresponding to a voice command. The machine may store the desired outcome as a reference and may automatically compare every outcome produced by a particular waveform representation with the reference. Again, this comparison leads to a probability of the waveform representation showing the accuracy of processing the waveform representation. Put differently, the probability of the desired outcome of the training voice data may represent the degree of accurate processing or desired outcome. For instance, an accurate processing or desired outcome is a robot lifting an arm, wherein the probability of the outcome shows the degree of the robot lifting an arm correctly, i.e. the degree of matching between the actual lifting and the desired lifting expressed by the voice command. Thus, the degree of accurate processing is determined by checking the reaction of the machine or device, like a robot. In this matter, the probability may be determined by the ML model

At block 320, a predetermined acoustic phonetic characteristic of the stored waveform representations may be extracted to modify the corresponding parameter and to produce a plurality of pre-processed waveform representations. A first example of a pre-processed waveform representation is a spectrogram, where the x-axis corresponds to time, and the y-axis corresponds to frequency. In the example of the spectrogram, the parameter to be modified is the frequency. A second example of a pre-processed waveform representation is a mel-generalized cepstral representation, where the power spectrum of speech is represented by mel-generalized cepstral coefficients.

At block 330, the ML model 110 is trained on the stored waveform representations, wherein no acoustic phonetic characteristics have been extracted, or trained on the pre-processed waveform representations with the extracted acoustic phonetic characteristics.

At block 340, the ML model 110 may be trained on additional data. The additional data may include parameters of phonetic characteristics, wherein the phonetic characteristics have not been preselected prior to the training mode and may be determined by the audio editor 120. Such training enables the ML model 110 to identify patterns of phonetic characteristics in the waveform representations and correlate the patterns to the outcome data.

At block 350, the trained supervised ML model 110 may be distributed to the computing platform 100 of FIG. 1A. The computing platform 100 stores the trained supervised ML model 110.

The trained supervised ML model 110 has been trained on a large set of voice data samples. A set of samples may be unique and distinct so as to produce a trained supervised ML model 110 that is domain-specific. Examples of domains include, but are not limited to, a field of industry, like a factory setting including robots, or a field of coffee machines, demographic group, and cultural group. However, in some instances, the voice data may be taken across multiple domains. For example, the voice data is taken across different industries (e.g., medicine or education), whereby the desired outcomes could vary greatly.

For example, in the domain of smart home devices, the present invention is capable of being trained with a dataset specifically customized to the voice functionality of a coffee machine voice response system. The outcome of the coffee machine is pouring the commanded coffee, like cappuccino. The simulated optimal voice profile generated by the trained supervised ML model 110 can be integrated directly into the voice response system of the coffee machine, making a seamless progression from the user voice data → waveform representation → ML model → modified waveform representation → cup of coffee. One benefit thereof is improved accuracy in conveying instructions to the coffee machine without the user noticing any difference in the operation of the coffee machine.

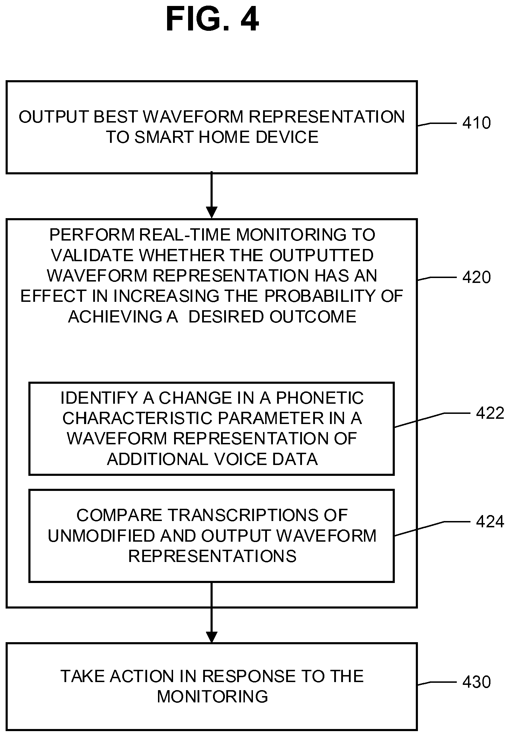

Reference is now made to FIG. 4, which illustrates an example of a method for conducting a voice command from a participant to a smart home device like a coffee machine. The participant uses the computing platform 100 of FIG. 1A. Voice data of the participant provides the waveform representation that is supplied to the trained supervised ML model 110 and the audio editor 120.

At block 410, the computing platform 100 receives voice data from the participant, generates a waveform representation, modifies the waveform representation to generate a plurality of modified waveform representations, determines the probabilities of the modified waveform representations corresponding to different outcomes, finds a best waveform representation having the highest probability of achieving a desired outcome among all modified waveform representations, and outputs the best waveform representation, for example, to the coffee machine. The best waveform representation is found according to the method of FIG. 2.

At block 420, the computing platform 100 performs real-time monitoring to validate whether the output waveform representation has an effect in increasing the probability of achieving the desired outcome. The desired outcome in the example of coffee machines may be the accurate action of the coffee machine pouring the type of coffee commanded by the participant. Two examples of the monitoring will now be provided.

At block 422, the monitoring includes identifying a change in a phonetic characteristic parameter in a waveform representation of an additional voice data. The change in the parameter may be determined by supplying a waveform representation of the additional voice data to the trained supervised ML model 110. Any parameter change may likely change the probability output by the trained supervised ML model 110.

At block 424, the monitoring includes creating a transcription of the waveform representation of the additional voice data and of the output modified waveform representation of the voice data, wherein transcription may mean converting the waveform representations into text. A comparison of the transcriptions corresponding to the waveform representations may indicate whether the output modified waveform representation has maintained its integrity in expressing words spoken by the participant. Any discrepancy in the transcriptions may inform the trained supervised ML model 110 of whether the current modified waveform representations are more or less intelligible than the unmodified waveform representation. There are different methods for checking the intelligibility of the modified waveform representations. One example of a method is to let a user score the modified and unmodified waveform representations of the same sample and decide which one of the waveform representations is more intelligible. Another example of a method is to use an ASR which checks the existence of the terms, e.g. in a dictionary, appearing in the transcriptions of the unmodified and modified waveforms. If the modified waveform representation converted into text is less intelligible, the trained ML model 110 is informed that the unmodified waveform representation is more intelligible.

At block 430, an action may be taken in response to the monitoring. If the monitoring at block 424 indicates that the modified waveform representations are deemed unintelligible, or if the monitoring at block 422 indicates that the modified waveform representations do not execute or control a device correctly, the modifications may be stopped. In the alternative, magnitude of the modifications may be changed.

In some implementations, a single computing platform 100 may perform the training mode and running mode. In other implementations, different computing platforms may be used for the training mode and running mode. As a first example, a first computing platform may perform the training mode and a second computing platform (the computing platform 100 of FIG. 1A) may receive the trained supervised ML mode 110 to perform the running mode. As a second example, a first computing platform (e.g., a server system) may perform the training mode, a second computing platform may receive the trained supervised ML model 110 to perform the running mode (the computing platform 100 of FIG. 1A), and a third computing platform (e.g., a personal computing device) may send the voice data to the second computing platform. The second computing platform which may have significantly greater computational power than the third computing platform may perform the running mode and may send the best waveform representation with the highest probability among all modified waveform representations to the third computing device.

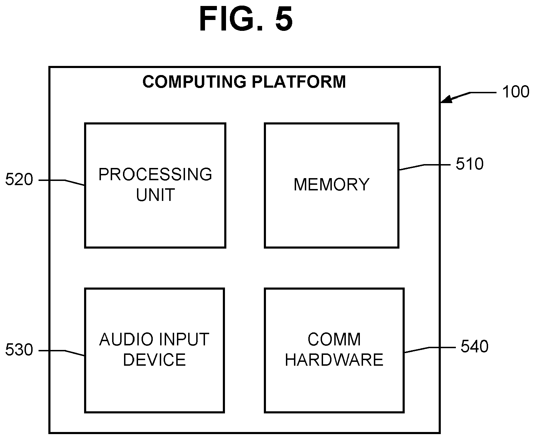

Reference is now made to FIG. 5, which illustrates an example of components of the computing platform 100. The computing platform 100 may include a memory 510 and a processing unit 520 for storing and using the trained supervised ML model 110, audio editor 120, selection logic 130, output device 135, and VoIP software 140. The computing platform 100 may also include an audio input device 530 (e.g., a microphone that preferably already provides waveform representations of the detected voice) for receiving voice data, wherein the audio input device 105 of FIG. 1A is equal or a part of the audio input device 530.

The computing platform 100 may further include communications hardware 540 (e.g., a network interface card, USB drive) for receiving the trained supervised ML model 110. For instance, the computing platform 100 may receive the trained supervised ML model 110 over the Internet via a browser user interface extension, an installed desktop application, a dongle USB driver configured for Internet communication, a mobile phone application, etc.

Methods and computing platforms herein may be used to modify waveform representations corresponding to voice data in real-time or non-real time.

Three examples will now be described: (1) a trained supervised ML model 110 is used for man machine interface to modify waveform representations of voice data of a participant interacting with a machine; (2) a trained supervised ML model 110 is used in customer relations to modify waveform representations of voice data of an agent who is conversing with a customer; and (3) a trained supervised ML model 110 is used by a professor at an online educational institution to modify waveform representations of voice data of a lecture that will be listened to by students at a later time.

### Example 1: Man machine interface

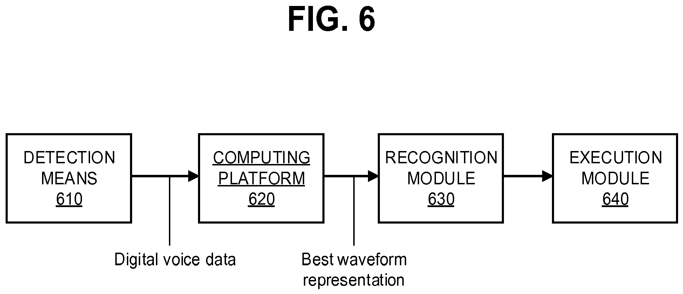

FIG. 6 shows a voice recognition system including detection means 610, a computing platform 620, a recognition module 630 and an execution module 640. As explained with respect to FIG. 6, an operator or instructor of a machine gives out a command to control the machine. The command is detected by the detection means 610, such as a microphone, and is provided as digital voice data to a computing platform 620. The computing platform 620 is basically the computing platform 100, in particular the machine learning module 150, the function of which was discussed with respect to FIG. 1A.

In the computing platform 620, an audio input device converts the voice data, which is here a voice command, to a waveform representation of the operator's command. The waveform representation is transmitted to a trained supervised ML model and an audio editor.

The audio editor repeatedly modifies the waveform representation to generate a plurality of modified waveform representations corresponding to the voice command of the operator of the machine and transmits the plurality of modified waveform representations to the trained supervised ML model.

The trained supervised ML model determines the probability for each waveform representation, wherein the probability indicates the degree of accurate processing of the waveform representation corresponding to a voice command.

A selection logic receives the probabilities of each (unmodified and modified) waveform representation and selects the waveform representation associated with the highest probability among all determined probabilities. An output device outputs the waveform representation with the highest probability to the recognition module 630.

The recognition module 630 recognizes the (unmodified or modified) waveform representation and maps the waveform representation to a command. The recognition module 630 transmits the command to the execution module 640.

The execution module 640 receives the command from the recognition module 630, analyzes and processes the command and executes a function of a device, wherein the function corresponds to the command. The execution module may be part of the electronic device/machine and directly interact with the electronics/mechanics or may be interfaced with the electronic device/machine outputting a control signal to the electronic device triggering the function.

By modifying the waveform representation in the computing platform 620 and by outputting the waveform representation with the highest probability, the man machine interface can be improved, as the machine is able to accurately process the voice command of the operator while consuming less memory capacity and processing capacity and spending less processing time.

Alternatively, the presented computing platform may be interfaced with existing voice recognition software, e.g. ASR software, so that the voice output from a VoIP software is input, recognized and analyzed by the voice recognition software which may trigger a function of an associated machine.

### Example 2: Customer relations

A giant retailer maintains a staff of agents who handle various customer relations like customer complaints. The retailer maintains a cloud that stores data of prior customer relations conversations between customers and agents. Participants in the prior conversations may include the present agents, but could also include former agents of the retailer, and agents who are employed elsewhere. The prior conversations may be labeled with CRM labels which indicate the outcomes of the conversations. For instance, an outcome could indicate a satisfactory resolution or an unsatisfactory resolution.

The retailer, or a third party, maintains a facility including a computing platform that receives the labeled voice data and trains an ML model on the labeled voice data. Some or all of the labeled voice data may be used to produce a trained supervised ML model 110 as illustrated in FIG. 1A and FIG. 1B.

Agents of the retailer are equipped with computing platforms equal to the computing platform 100 illustrated in FIG. 1A. The agents may be in a central location or they may be dispersed at different remote locations. For instance, some agents might work at a central office, while other agents work from home. The facility makes the trained supervised ML model 110 available to the computing platforms 100 of the agents.

The agents use their computing platforms 100 to interact with customers. The computing platforms 100 modify agents' waveform representations to increase the probability of producing positive customer interactions (e.g., successful resolutions). If an agent is about to call a customer and knows that the customer responds well to, for instance, a higher pitch or an inflection placed at the end of the word, the agent select one or more phonetic characteristics for the computing platform 100 to modify the corresponding parameter.

The computing platform 100 can also apply the trained supervised ML model 110 to a waveform representation corresponding to customer's voice data. For instance, a best waveform representation of the customer's voice data can be found to produce a modified waveform representation so the agent hears a "better" customer voice. For example, a "better" customer voice might be perceived as less confrontational or more intelligible.

Each computing platform 100 may be characterized as performing a supervisory role with respect to an agent. The computing platform 100 can monitor the form of the agent's language. Advantageously, a supervisor is not required to be present at each remote location. Thus, the computing platforms 100 enable the agents to work under "supervision" at remote locations.

### Example 3: Online educational Institution

An online educational institution provides an online interface via a web browser that enables the delivery of recorded vocal content to be delivered to a plurality of remotely located students. The online educational institution stores a backlog of recorded prior lessons and stores feedback from those students who have received the recorded educational material associated with the prior recorded lessons. Examples of the feedback include a scale of 1-10, a yes and no answer to a question, and how a student perceives the quality of their learning experience. The feedback is used to label the prior lessons, wherein the labeled prior lessons are used to train an ML model in a lesson specific domain.

A third party maintains an online cloud-based platform, which accesses the labeled lessons and performs the training. Resulting are custom domain-specific trained supervised ML models 110 for determining the success probability of phonetic characteristics in delivering an education lesson in the desired domain.

Some teachers at the online institution are equipped with computing platforms 100. Those teachers make their usual recordings of lessons, use their computing platforms 100 to modify the lessons, and then upload the modified lessons via a web browser to an online interface provided by the online educational institution.

If some teachers at the online institution are not equipped with computing platforms 100, the teachers make their usual recordings of lessons and upload the recordings to a website associated with the online educational institution. The lessons uploaded to the website are modified with trained supervised ML models .

The modified lessons may be uploaded onto the online interface via a web browser for students to access. The students, teachers, third party (voice modification supplier) and online educational institution are all remotely located.

The examples (2) and (3) illustrate how the computing platforms 100 may be used in interactions between participants, for example enabling agents to deal more successfully with customers, and teachers to be more effective in delivering educational outcomes to their students.

Computing platforms 100 and methods herein are not limited to these three examples.

## Claims

1. A computing platform (100) to modify voice data for a man machine interface, the computing platform (100) comprising:
an audio input device (105) configured to generate a waveform representation of input voice data, the input voice data comprising a voice command requesting an electronic device to carry out a specific function expressed by the voice command;
an audio editor (120) configured to repeatedly modify a parameter of an acoustic phonetic characteristic of the waveform representation to produce a plurality of modified waveform representations having different modified parameters of the acoustic phonetic characteristic, wherein the acoustic phonetic characteristics include at least one of pitch, timbre, volume, power, duration, noise ratios, length of sounds, and filter matches;
a trained supervised machine learning, ML, model (110) configured to apply the modified waveform representations to determine probabilities of the modified waveform representations, the modified waveform representations corresponding to different outcomes and an outcome comprising an action of the electronic device, wherein the trained supervised ML model (110) has been trained on input-output pairs, waveform representations of voice data being the input and corresponding probabilities being the output, and
wherein the probability of a waveform representation indicates the degree of accurate processing of the waveform representation into action, the probability showing the likeness of the action of the electronic device to an outcome expressed by the voice command;
a selection logic (130) configured to select the modified waveform representation associated with the highest probability of the determined probabilities, for which the outcome corresponds to the input voice data; and
an output device (135) configured to output the modified waveform representation associated with the highest probability.

2. The computing platform (100) of claim 1, further comprising a softmax layer (112) configured to provide the probabilities of the different outcomes.

3. The computing platform (100) of one of claims 1 or 2, wherein the voice data constitutes a voice command and the computing platform (100) controls a function of a device based on the output modified waveform representation corresponding to the voice command.

4. The computing platform (100) of one of claims 1 to 3, further comprising a Voice over IP, VoIP, software module (140) configured to receive the modified waveform representation associated with the highest probability and to convert said modified waveform representation into voice data.

5. The computing platform (100) of claim 1, further comprising:
a database, wherein the database is configured to store waveform representations of training voice data and probabilities of the stored waveform representations corresponding to different outcomes;
a fixed feature extraction unit configured to extract one or more acoustic phonetic characteristics of the stored waveform representations, wherein the trained supervised ML model (110) has been trained on the parameters of the extracted one or more acoustic phonetic characteristics.

6. The computing platform (100) of claim 5, wherein the trained supervised ML model (110) has been trained in parallel and/or in sequence on the parameters of a predetermined and one or more extracted acoustic phonetic characteristics.

7. The computing platform (100) of one of claims 1 to 6, wherein the audio editor (120) is further configured to modify different parameters of the acoustic phonetic characteristics of the waveform representation to produce a plurality of modified waveform representations and the trained supervised ML model (110) is further configured to determine the probabilities corresponding to the plurality of waveform representations.

8. A voice recognition system, comprising
detection means (610) configured to detect voice and to generate voice data;
a computing platform (620) according to one of claims 1 to 7, configured to receive voice data and output a modified waveform representation;
a recognition module (630) configured to receive the modified waveform representation, map the modified waveform representation to a command and output the command; and
an execution module (640) configured to receive the command, analyze the command and execute a function corresponding to the command.

9. A method to modify voice data for a man machine interface, the method comprising the steps of:
generating a waveform representation of input voice date, the input voice data comprising a voice command requesting an electronic device to carry out a specific function expressed by the voice command;
repeatedly modifying a parameter of an acoustic phonetic characteristic of the waveform representation to produce a plurality of modified waveform representations having different modified parameters of the acoustic phonetic characteristic, wherein the acoustic phonetic characteristics include at least one of pitch, timbre, volume, power, duration, noise ratios, length of sounds, and filter matches;
applying the modified waveform representations to a trained supervised machine learning, ML, model (110) to determine probabilities of the modified waveform representations, the modified waveform representations corresponding to different outcomes and an outcome comprising an action of the electronic device, wherein the trained supervised ML model (110) has been trained on input-output pairs, waveform representations of voice data being the input and corresponding probabilities being the output, and wherein the probability of a waveform representation indicates the degree of accurate processing of the waveform representation into action, the probability showing the likeness of the action of the electronic device to an outcome expressed by the voice command;
selecting the modified waveform representation associated with the highest probability of the determined probabilities, for which the outcome corresponds to the input voice data; and
outputting the modified waveform representation associated with the highest probability.

10. The method of claim 9, wherein the trained supervised ML model (110) has been trained by:
accessing a database including stored waveform representations of training voice data and probabilities of the stored waveform representations corresponding to different outcomes;
extracting one or more acoustic phonetic characteristics of the stored waveform representation; and
training the supervised ML model (110) on the parameters of the extracted one or more acoustic phonetic characteristics.

11. The method of claim 9 or 10, wherein the method is performed on a computing platform (110) of one of claims 1 to 7.

12. The method of claim 11, wherein the method of one of claims 9 or 10 is performed on a second computing platform.

## Patentansprüche

1. Rechenplattform (100) zum Modifizieren von Sprachdaten für eine Mensch-Maschine-Schnittstelle, die Rechenplattform (100) umfassend:
eine Audioeingabevorrichtung (105), die konfiguriert ist, eine Wellenformdarstellung eingegebener Sprachdaten zu erzeugen, wobei die eingegebenen Sprachdaten einen Sprachbefehl umfassen, der eine elektronische Vorrichtung auffordert, eine spezifische Funktion auszuführen, die durch den Sprachbefehl ausgedrückt ist;
einen Audioeditor (120), der konfiguriert ist, wiederholt einen Parameter einer akustischen phonetischen Charakteristik der Wellenformdarstellung zu modifizieren, um eine Vielzahl von modifizierten Wellenformdarstellungen zu erzeugen, die verschiedene modifizierte Parameter der akustischen phonetischen Charakteristik aufweisen, wobei die akustischen phonetischen Charakteristiken mindestens eines von Tonhöhe, Klangfarbe, Volumen, Leistung, Dauer, Rauschverhältnissen, Tonlänge und Filterübereinstimmungen beinhalten;
ein geschultes überwachtes Maschinenlern-, ML-, Modell (110), das konfiguriert ist, die modifizierten Wellenformdarstellungen anzuwenden, um Wahrscheinlichkeiten der modifizierten Wellenformdarstellungen zu bestimmen, wobei die modifizierten Wellenformdarstellungen verschiedenen Ergebnissen entsprechen und ein Ergebnis eine Aktion der elektronischen Vorrichtung umfasst, wobei das geschulte überwachte ML-Modell (110) an Eingangs-Ausgangs-Paaren geschult wurde, wobei Wellenformdarstellungen von Sprachdaten der Eingang sind und entsprechende Wahrscheinlichkeiten der Ausgang sind, und wobei die Wahrscheinlichkeit einer Wellenformdarstellung den Grad an exakter Verarbeitung der Wellenformdarstellung zu einer Aktion angibt, wobei die Wahrscheinlichkeit die Gleichheit der Aktion der elektronischen Vorrichtung mit einem Ergebnis zeigt, das durch den Sprachbefehl ausgedrückt ist;
eine Auswahllogik (130), die konfiguriert ist, die modifizierte Wellenformdarstellung auszuwählen, die mit der höchsten Wahrscheinlichkeit der bestimmten Wahrscheinlichkeiten verknüpft ist, für die das Ergebnis den eingegebenen Sprachdaten entspricht; und
eine Ausgabevorrichtung (135), die konfiguriert ist, die modifizierte Wellenformdarstellung auszugeben, die mit der höchsten Wahrscheinlichkeit verknüpft ist.

2. Rechenplattform (100) nach Anspruch 1, weiter umfassend eine Softmax-Schicht (112), die konfiguriert ist, die Wahrscheinlichkeiten der verschiedenen Ergebnisse bereitzustellen.

3. Rechenplattform (100) nach einem der Ansprüche 1 oder 2, wobei die Sprachdaten einen Sprachbefehl darstellen und die Rechenplattform (100) eine Funktion einer Vorrichtung basierend auf der ausgegebenen modifizierten Wellenformdarstellung entsprechend dem Sprachbefehl steuert.

4. Rechenplattform (100) nach einem der Ansprüche 1 bis 3, weiter umfassend ein Sprache-über-IP-, VolP-, Softwaremodul (140), das konfiguriert ist, die modifizierte Wellenformdarstellung zu empfangen, die mit der höchsten Wahrscheinlichkeit verknüpft ist, und die modifizierte Wellenformdarstellung in Sprachdaten umzuwandeln.

5. Rechenplattform (100) nach Anspruch 1, weiter umfassend:
eine Datenbank, wobei die Datenbank konfiguriert ist, Wellenformdarstellungen von Schulungssprachdaten und Wahrscheinlichkeiten der gespeicherten Wellenformdarstellungen entsprechend verschiedenen Ergebnissen zu speichern;
eine Festgesetztes-Merkmal-Extraktionseinheit, die konfiguriert ist, eine oder mehrere akustische phonetische Charakteristiken der gespeicherten Wellenformdarstellungen zu extrahieren, wobei das geschulte überwachte ML-Modell (110) an den Parametern der extrahierten einen oder mehreren akustischen phonetischen Charakteristiken geschult wurde.

6. Rechenplattform (100) nach Anspruch 5, wobei das geschulte überwachte ML-Modell (110) parallel und/oder in Abfolge an den Parametern einer vorbestimmten und einer oder mehrerer extrahierter akustischer phonetischer Charakteristiken geschult wurde.

7. Rechenplattform (100) nach einem der Ansprüche 1 bis 6, wobei der Audioeditor (120) weiter konfiguriert ist, verschiedene Parameter der akustischen phonetischen Charakteristiken der Wellenformdarstellung zu modifizieren, um eine Vielzahl von modifizierten Wellenformdarstellungen zu erzeugen, und das geschulte überwachte ML-Modell (110) weiter konfiguriert ist, die Wahrscheinlichkeiten entsprechend der Vielzahl von Wellenformdarstellungen zu bestimmen.

8. Spracherkennungssystem, umfassend
Detektionsmittel (610), die konfiguriert sind, Sprache zu erfassen und Sprachdaten zu erzeugen;
eine Rechenplattform (620) nach einem der Ansprüche 1 bis 7, die konfiguriert ist, Sprachdaten zu empfangen und eine modifizierte Wellenformdarstellung auszugeben;
ein Erkennungsmodul (630), das konfiguriert ist, die modifizierte Wellenformdarstellung zu empfangen, die modifizierte Wellenformdarstellung auf einen Befehl abzubilden und den Befehl auszugeben; und
ein Ausführungsmodul (640), das konfiguriert ist, den Befehl zu empfangen, den Befehl zu analysieren und eine Funktion entsprechend dem Befehl auszuführen.

9. Verfahren zum Modifizieren von Sprachdaten für eine Mensch-Maschine-Schnittstelle, das Verfahren umfassend die Schritte zum:
Erzeugen einer Wellenformdarstellung eingegebener Sprachdaten, wobei die eingegebenen Sprachdaten einen Sprachbefehl umfassen, der eine elektronische Vorrichtung auffordert, eine spezifische Funktion auszuführen, die durch den Sprachbefehl ausgedrückt ist;
wiederholtes Modifizieren eines Parameters einer akustischen phonetischen Charakteristik der Wellenformdarstellung, um eine Vielzahl von modifizierten Wellenformdarstellungen zu erzeugen, die verschiedene modifizierte Parameter der akustischen phonetischen Charakteristik aufweisen, wobei die akustischen phonetischen Charakteristiken mindestens eines von Tonhöhe, Klangfarbe, Volumen, Leistung, Dauer, Rauschverhältnissen, Tonlänge und Filterübereinstimmungen beinhalten;
Anwenden der modifizierten Wellenformdarstellungen bei einem geschulten überwachten Maschinenlern-, ML-, Modell (110), um Wahrscheinlichkeiten der modifizierten Wellenformdarstellungen zu bestimmen, wobei die modifizierten Wellenformdarstellungen verschiedenen Ergebnissen entsprechen und ein Ergebnis eine Aktion der elektronischen Vorrichtung umfasst, wobei das geschulte überwachte ML-Modell (110) an Eingangs-Ausgangs-Paaren geschult wurde, wobei Wellenformdarstellungen von Sprachdaten der Eingang sind und entsprechende Wahrscheinlichkeiten der Ausgang sind, und wobei die Wahrscheinlichkeit einer Wellenformdarstellung den Grad an exakter Verarbeitung der Wellenformdarstellung zu einer Aktion angibt, wobei die Wahrscheinlichkeit die Gleichheit der Aktion der elektronischen Vorrichtung mit einem Ergebnis zeigt, das durch den Sprachbefehl ausgedrückt ist;
Auswählen der modifizierten Wellenformdarstellung, die mit der höchsten Wahrscheinlichkeit der bestimmten Wahrscheinlichkeiten verknüpft ist, für die das Ergebnis den eingegebenen Sprachdaten entspricht; und
Ausgeben der modifizierten Wellenformdarstellung, die mit der höchsten Wahrscheinlichkeit verknüpft ist.

10. Verfahren nach Anspruch 9, wobei das geschulte überwachte ML-Modell (110) geschult wurde durch:
Zugreifen auf eine Datenbank, die gespeicherte Wellenformdarstellungen von Schulungssprachdaten und Wahrscheinlichkeiten der gespeicherten Wellenformdarstellungen entsprechend verschiedenen Ergebnissen beinhaltet;
Extrahieren einer oder mehrerer akustischer phonetischer Charakteristiken der gespeicherten Wellenformdarstellung; und
Schulen des überwachten ML-Modells (110) an den Parametern der extrahierten einen oder mehreren akustischen phonetischen Charakteristiken.

11. Verfahren nach Anspruch 9 oder 10, wobei das Verfahren an einer Rechenplattform (110) nach einem der Ansprüche 1 bis 7 durchgeführt wird.

12. Verfahren nach Anspruch 11, wobei das Verfahren nach einem der Ansprüche 9 oder 10 an einer zweiten Rechenplattform durchgeführt wird.

## Revendications

1. Plate-forme de calcul (100) pour modifier des données vocales pour une interface homme-machine, la plate-forme de calcul (100) comprenant :
un dispositif d'entrée audio (105) configuré pour produire une représentation de forme d'onde de données vocales d'entrée, les données vocales d'entrée comprenant un ordre vocal demandant à un dispositif électronique d'effectuer une fonction spécifique exprimée par l'ordre vocal ;
un éditeur audio (120) configuré pour modifier à plusieurs reprises un paramètre d'une caractéristique phonétique acoustique de la représentation de forme d'onde pour produire une pluralité de représentations de forme d'onde modifiées ayant des paramètres modifiés différents de la caractéristique phonétique acoustique, dans lequel les caractéristiques phonétiques acoustiques incluent au moins l'un d'une hauteur de son, d'un timbre, d'un volume, d'une puissance, d'une durée, de rapports de bruit, d'une longueur de sons et d'adaptations de filtre ;
un modèle d'apprentissage automatique entraîné, ML, (110) configuré pour appliquer les représentations de forme d'onde modifiées pour déterminer des probabilités des représentations de forme d'onde modifiées, les représentations de forme d'onde modifiées correspondant à des résultats différents et un résultat comprenant une action du dispositif électronique, dans lequel le modèle ML automatique entraîné (110) a été entraîné sur des couples d'entrée-sortie, des représentations de forme d'onde de données vocales étant l'entrée et des probabilités correspondantes étant la sortie, et dans lequel la probabilité d'une représentation de forme d'onde indique le degré de traitement précis de la représentation de forme d'onde en action, la probabilité montrant la ressemblance de l'action du dispositif électronique à un résultat exprimé par l'ordre vocal ;
une logique de sélection (130) configurée pour sélectionner la représentation de forme d'onde modifiée associée à la probabilité la plus élevée des probabilités déterminées, pour laquelle le résultat correspond aux données vocales d'entrée ; et
un dispositif de sortie (135) configuré pour sortir la représentation de forme d'onde modifiée associée à la probabilité la plus élevée.

2. Plate-forme de calcul (100) selon la revendication 1, comprenant en outre une couche softmax (112) configurée pour fournir les probabilités des différents résultats.

3. Plate-forme de calcul (100) selon l'une des revendications 1 ou 2, dans laquelle les données vocales constituent un ordre vocal et la plate-forme de calcul (100) commande une fonction d'un dispositif sur la base de la représentation de forme d'onde modifiée de sortie correspondant à l'ordre vocal.

4. Plate-forme de calcul (100) selon l'une des revendications 1 à 3, comprenant en outre un module logiciel (140) de Voix sur IP, VoIP, configuré pour recevoir la représentation de forme d'onde modifiée associée à la probabilité la plus élevée et pour transformer ladite représentation de forme d'onde modifiée en données vocales.

5. Plate-forme de calcul (100) selon la revendication 1, comprenant en outre :
une base de données, dans laquelle la base de données est configurée pour stocker des représentations de forme d'onde de données vocales d'entraînement et des probabilités des représentations de forme d'onde stockées correspondant aux différents résultats ;
une unité d'extraction de particularité fixée configurée pour extraire une ou plusieurs caractéristiques phonétiques acoustiques des représentations de forme d'onde stockées, dans laquelle le modèle ML automatique entraîné (110) a été entraîné sur les paramètres des unes ou plusieurs caractéristiques phonétiques acoustiques extraites.

6. Plate-forme de calcul (100) selon la revendication 5, dans laquelle le modèle ML automatique entraîné (110) a été entraîné en parallèle et/ou en séquence sur les paramètres d'une caractéristique prédéterminée et d'une ou plusieurs caractéristiques phonétiques acoustiques extraites.

7. Plate-forme de calcul (100) selon l'une des revendications 1 à 6, dans lequel l'éditeur audio (120) est en outre configuré pour modifier différents paramètres des caractéristiques phonétiques acoustiques de la représentation de forme d'onde pour produire une pluralité de représentations de forme d'onde modifiées et le modèle ML automatique entraîné (110) est en outre configuré pour déterminer les probabilités correspondant à la pluralité de représentations de forme d'onde.

8. Système de reconnaissance vocale, comprenant
un moyen de détection (610) configuré pour détecter de la voix et produire des données vocales ;
une plate-forme de calcul (620) selon l'une des revendications 1 à 7, configurée pour recevoir des données vocales et sortir une représentation de forme d'onde modifiée ;
un module de reconnaissance (630) configuré pour recevoir la représentation de forme d'onde modifiée, mettre en correspondance la représentation de forme d'onde modifiée avec un ordre et sortir l'ordre ; et
un module d'exécution (640) configuré pour recevoir l'ordre, analyser l'ordre et exécuter une fonction correspondant à l'ordre.

9. Procédé de modification de données vocales pour une interface homme-machine, le procédé comprenant les étapes consistant à :
produire une représentation de forme d'onde de données vocales d'entrée, les données vocales d'entrée comprenant un ordre vocal demandant à un dispositif électronique d'effectuer une fonction spécifique exprimée par l'ordre vocal ;
modifier à plusieurs reprises un paramètre d'une caractéristique phonétique acoustique de la représentation de forme d'onde pour produire une pluralité de représentations de forme d'onde modifiées ayant différents paramètres modifiés de la caractéristique phonétique acoustique, dans lequel les caractéristiques phonétiques acoustiques incluent au moins l'un d'une hauteur de son, d'un timbre, d'un volume, d'une puissance, d'une durée, de rapports de bruit, d'une longueur de sons et d'adaptations de filtre ;
appliquer les représentations de forme d'onde modifiées à un modèle (110) d'apprentissage automatique entraîné, ML, pour déterminer des probabilités des représentations de forme d'onde modifiées, les représentations de forme d'onde modifiées correspondant à des résultats différents et un résultat comprenant une action du dispositif électronique, dans lequel le modèle ML automatique entraîné (110) a été entraîné sur des couples d'entrée-sortie, des représentations de forme d'onde de données vocales étant l'entrée et des probabilités correspondantes étant la sortie, et dans lequel la probabilité d'une représentation de forme d'onde indique le degré de traitement précis de la représentation de forme d'onde en action, la probabilité montrant la ressemblance de l'action du dispositif électronique à un résultat exprimé par l'ordre vocal ;
sélectionner la représentation de forme d'onde modifiée associée à la probabilité la plus élevée des probabilités déterminées, pour laquelle le résultat correspond aux données vocales d'entrée ; et
sortir la représentation de forme d'onde modifiée associée à la probabilité la plus élevée.

10. Procédé selon la revendication 9, dans lequel le modèle ML automatique entraîné (110) a été entraîné par :
accès à une base de données incluant des représentations de forme d'onde stockées de données vocale d'entraînement et des probabilités des représentations de forme d'onde stockées correspondant à différents résultats ;
extraction d'une ou plusieurs caractéristiques phonétiques acoustiques de la représentation de forme d'onde stockée ; et
entraînement du modèle ML automatique (110) sur les paramètres des unes ou plusieurs caractéristiques phonétiques acoustiques extraites.

11. Procédé selon la revendication 9 ou 10, dans lequel le procédé est effectué sur une plate-forme de calcul (110) selon l'une des revendications 1 à 7.

12. Procédé selon la revendication 11, dans lequel le procédé selon l'une des revendications 9 ou 10 est effectué sur une seconde plate-forme de calcul.
